# EUROPÄISCHE PATENTANMELDUNG

(11) **EP 0 800 849 A1**
(43) Veröffentlichungstag der Anmeldung: **15.10.1997**
(21) Anmeldenummer: 97103196.8
(22) Anmeldetag: 27.02.1997
(51) Int. Cl.: B01D 17/025, B01D 17/04

(54) **Vorrichtung zum Trennen von dispersen Flüssig-Flüssig- und Flussig-Fest-Stoffsystemen**

(30) Priorität: 07.03.1996 DE 29604222 U
(71) Anmelder: DYCKERHOFF & WIDMANN AG, D-81829 München-Riem (DE)
(72) Erfinder:
(74) Vertreter: Patentanwälte Möll und Bitterich

(57) **Zusammenfassung**

Eine Vorrichtung zum Trennen von dispersen Flüssig-Flüssig- und Flüssig-Fest-Stoffsystemen umfaßt einen Behälter (2) mit Zu- und Ablauf (7 bzw. 10) sowie mindestens eine von der Flüssigkeit durchströmte Koaleszenzbarriere (17). Die Barriere (17) ist zumindest mit einem wesentlichen Teil ihrer Durchströmfläche oberhalb des Ruhewasserspiegels (11) in dem Behälter (2) angeordnet. Zweckmäßig befindet sich die Barriere (17) oberhalb einer Überlaufwand (12) und ist um eine horizontale Achse schwenkbar. Die Barriere (17) wird nur bei Wasserzulauf durchströmt. Erfolgt kein Zulauf, ist sie frei zugänglich und kann ohne Ausbau mit einfachem Wasserstrahl von oben her gereinigt werden.

## Beschreibung

Die Erfindung betrifft eine Vorrichtung zum Trennen von dispersen Flüssig-Flüssig- und Flüssig-Fest-Stoffsystemen gemäß dem Oberbegriff des Patentanspruchs 1.

Zum Abscheiden von in einer Flüssigkeit suspendierter sinkfähiger Feststoffe und/oder darin dispergierter Leichter Tröpfchen aus der Flüssigkeit, zumeist Wasser, durch Absinken bzw. Koaleszenz der suspendierten bzw. dispergierten Phasen sind sogenannte Koaleszenzabscheider bekannt. Koaleszenzabscheider sind Behälter, in denen die Flüssigkeit Barrieren durchströmt, in denen die suspendierte bzw. dispergierte Phase Gelegenheit zur Abscheidung erhält. Bei sogenannten Plattenabscheidern bestehen die Koaleszenzbarrieren aus zu einem Plattenstapel zusammengepackten Lamellenplatten, auf denen die sinkfähigen Partikel nach unten gleiten können, um auf den Boden des Behälters zu sinken. Die zu leichten Tröpfchen dispergierten Substanzen lagern sich an den Unterseiten der Lamellen an; dort bilden sie eine dünne Schicht, die infolge des natürlichen Auftriebs nach oben steigt. Neben derartigen Plattenabscheidern gibt es auch Abscheider mit Koaleszenzbarrieren aus zu ein oder mehreren vertikalen Wänden zusammengefaßten Matten aus faserigem Material. An den Fasern können sich kleine Tröpfchen beim Vorbeistreichen anlagern und mit anderen Tröpfchen koaleszieren, d.h. sich zu größeren Tropfen zusammenschließen, die dann ebenfalls zur Oberfläche der Flüssigkeit aufsteigen, von wo sie abgezogen werden können.

Koaleszenzbarrieren aus Matten haben die nachteilige Eigenschaft, neben der Koaleszenzwirkung für leichte Tröpfchen auch als Filter für sinkfähige Feststoffe zu wirken. Da die zu klärenden Flüssigkeiten in der Regel nicht nur zu Tröpfchen dispergierte Leichtflüssigkeiten, sondern oft auch Schmutzteilchen als Schwebstoffe enthalten, können sich die Matten infolge der Filterwirkung mit der Zeit zusetzen, was zu einer Reduzierung ihrer Leistungsfähigkeit und schließlich zu einer Verstopfung führt. Je nach Anordnung und Ausführung der Koaleszenzbarriere können dabei große Aufwendungen erforderlich sein, um eine Reinigung bzw. Wiederherstellung der Leistungsfähigkeit zu erreichen.

Bei den bekannten Systemen der Koaleszenzabscheider sind die Koaleszenzbarrieren in der Regel so angeordnet, daß sie auch bei nicht vorhandenem Wasserdurchfluß zu weiten Teilen unter Wasser liegen. Folglich gibt es zur Reinigung nur zwei Möglichkeiten: Herausnahme oder (Rück-)Spülung der Koaleszenzbarriere. Im ersten Fall muß die Koaleszenzbarriere teilweise oder vollständig aus dem Behälter herausgenommen werden, um sie anschließend zu reinigen oder sie teilweise oder vollständig zu ersetzen. Besteht die Koaleszenzbarriere aus Matten, müssen diese in der Regel als Sondermüll entsorgt werden. Zur Durchführung einer (Rück-)Spülung ist eine zumindest teilweise Entleerung des Behälters erforderlich. Bei großen (Rück-)Spülmengen ist ein gleichzeitiges Absaugen von Wasser aus dem Behälter notwendig. In jedem Fall muß die Flüssigkeit entsorgt werden.

Vor diesem Hintergrund liegt der Erfindung die Aufgabe zugrunde, eine Möglichkeit zu schaffen, um die Reinigung von Koaleszenzabscheidern zu vereinfachen und zu erleichtern.

Gemäß der Erfindung wird diese Aufgabe durch die im Anspruch 1 angegebenen Merkmale gelöst.

Vorteilhafte Weiterbildungen ergeben sich aus den Unteransprüchen.

Der wesentliche Vorteil der erfindungsgemäßen Anordnung der Koaleszenzbarriere oberhalb des Ruhewasserspiegels besteht darin, daß die Koaleszenzbarriere nur bei Wasserzulauf durchströmt wird. Sie ist dann, wenn kein Zulauf erfolgt, frei zugänglich und kann somit ohne Ausbau mit einfachem Wasserstrahl von oben her gereinigt werden. Durch eine gelenkige Befestigung der Koaleszenzbarriere kann die Reinigung des Koaleszenzmaterials sehr einfach sowohl auf der Zu-, als auch auf der Abströmseite erfolgen.

Vorteilhaft ist eine Verschlußvorrichtung im Zulauf, durch die jederzeit sichergestellt werden kann, daß während einer durchzuführenden Reinigung kein Abwasserdurchfluß anfällt.

Die Erfindung wird nachstehend anhand eines in der Zeichnung dargestellten Ausführungsbeispiels näher erläutert. Es zeigt
- Fig. 1: einen Vertikalschnitt durch einen gemäß der Erfindung ausgebildeten Koaleszenzabscheider und
- Fig. 2: einen um 90 Grad gegenüber der Darstellung in Fig. 1 verschwenkten Vertikalschnitt.

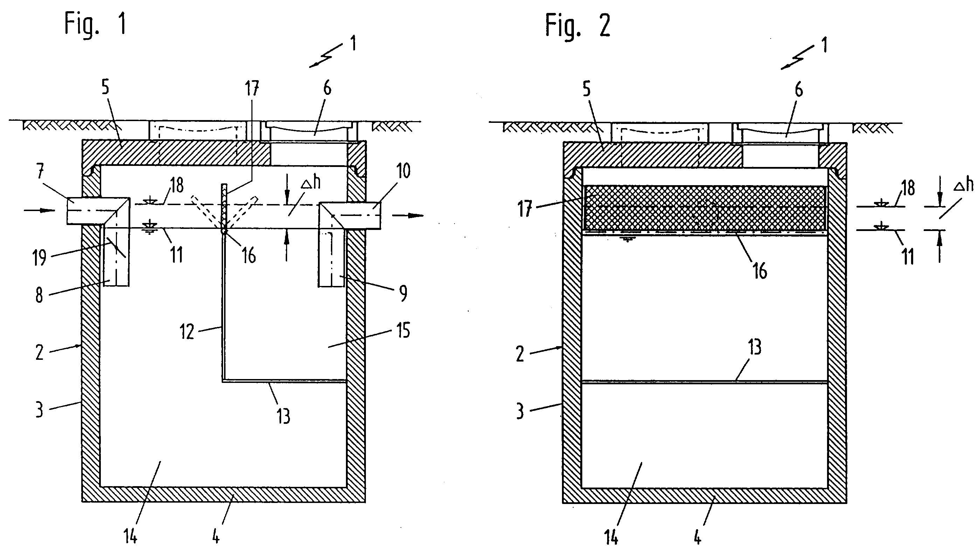

Bei dem in Fig. 1 dargestellten Ausführungsbeispiel besteht der Koaleszenzabscheider 1 aus einem Behälter 2 aus Beton oder Stahlbeton, der meist als fertigbauteil ausgebildet sein wird. Die Behälterwand 3 ist meist kreiszylindrisch ausgebildet, wenngleich dies keine Voraussetzung für die Verwirklichung der Erfindung ist. Der Behälter 2 besitzt unten eine Behältersohle 4 und ist oben durch einen Deckel 5 abgedeckt, in dem sich zumindest eine Schachtöffnung 6 befindet.

Der Behälter weist auf der einen Seite ein Zulaufrohr 7 auf, das sich in ein Tauchrohr 8 fortsetzt. Der Abzug der gereinigten Flüssigkeit erfolgt auf der gegenüberliegenden Seite ebenfalls über ein Tauchrohr 9 - oder auch eine Tauchwand - und ein Ablaufrohr 10. Durch die Unterkante des Ablaufrohrs 10 ist der Ruhewasserspiegel 11 bestimmt.

Der Behälter 2 ist in Querrichtung durch eine Überlaufwand 12 unterteilt, die sich nach unten hin auch in eine Zwischensohle 13 fortsetzt. Hierdurch wird eine erste Abscheidekammer 14 für die Sinkstoffe gebildet und eine zweite Abscheidekammer 15 für die Flüssigkeit, in der sich die dispergierte Phase an der Oberfläche ansammeln kann.

Die Oberkante der Überlaufwand 12, die zugleich eine Überlaufkante 16 bildet, liegt in Höhe des Ruhewasserspiegels 11. An der Überlaufwand 12 ist in Höhe der Überlaufkante 16 die eigentliche Koaleszenzbarriere 17 gelenkig so angeschlossen, daß sie in die in Fig. 1 gestrichelt angedeutete Winkellagen geschwenkt werden kann.

Im Falle eines Zulaufs von Flüssigkeit durch das Zulaufrohr 7 steigt der Ruhewasserspiegel 11 um die Höhe Delta h an bis auf den Betriebswasserspiegel 18. Während die suspendierte feste Phase der Flüssigkeit Gelegenheit erhält, in der ersten Abscheidekammer 14 zu Boden auf die Behältersohle 4 zu sinken, tritt die Flüssigkeit mit der dispergierten flüssigen Phase durch die Koaleszenzbarriere 17 hindurch und gelangt so in den zweiten Abscheideraum 15, aus dem sie durch das Tauchrohr 9 und das Ablaufrohr 10 abfließen kann.

Durch Anordnung der Koaleszenzbarriere 17 vollständig oberhalb des Ruhewasserspiegels 11 ist diese, ohne sie ausbauen oder den Behälter entleeren zu müssen, jederzeit mit einfachem Wasserstrahl von oben her zu reinigen; dies natürlich unter der Voraussetzung, daß während der Reinigung kein Abwasser zufließt. Dies kann durch eine im Zulauf, z.B. in dem Tauchrohr 8 angeordnete, an sich bekannte Verschlußvorrichtung 19 jederzeit sichergestellt werden.

Durch die gelenkige Befestigung der Koaleszenzbarriere 17 zum Beispiel über einfache Scharniere kann das Koaleszenzmaterial, z.B. Fasermatten, Fasergestrick oder dergleichen, sehr einfach sowohl auf der Zu-, als auch auf der Abströmseite durch Wasserstrahl abgespritzt und so gereinigt werden. Durch Ausführung der Koaleszenzbarriere 17 mit geringer Dicke und Dichte sowie großer Anströmfläche ist die Reinigung mit geringer Wassermenge sichergestellt. Das somit auch nur in geringem Maße anfallende Überschußwasser durchströmt die Koaleszenzbarriere 17 nur in ihrem untersten Bereich und hat damit keinen Einfluß auf den Reinigungsvorgang.

Da die Koaleszenzbarriere oberhalb der Überlaufwand 12, also zwischen der ersten Abscheidekammer 14 und der zweiten Abscheidekammer 15 liegt, gelangen durch entsprechende Wahl der Richtung für den Wasserstrahl die bei der Reinigung abgespülten Sedimentstoffe nur in die erste Abscheidekammer 14, setzen sich dort im Schlammspeicherraum ab und brauchen nicht separat entsorgt zu werden.

Die einfache Bauart der erfindungsgemäßen Vorrichtung erlaubt eine Automatisierung der Reinigung maschinell bzw. ohne personellen Aufwand. Der automatisierte Reinigungsprozeß kann beispielsweise über eine entsprechende Verschmutzungskontrolle oder Aufstaumessung ausgelöst werden.

Gegenüber bekannten Abscheidevorrichtungen dieser Art besteht der wesentliche Vorteil der Erfindung darin, daß zur Reinigung der Koaleszenzbarriere kein Material entnommen oder ausgetauscht werden muß und daß eine Reinigungsspülung vom Betreiber vor Ort einfach und unbedenklich durchgeführt werden kann.

## Patentansprüche

1. Vorrichtung zum Trennen von dispersen Flüssig-Flüssig- und Flüssig-Fest-Stoffsystemen, bestehend aus einem Behälter (2) mit Zu- und Ablauf (7 bzw. 10) sowie mindestens einer von der Flüssigkeit durchströmten Koaleszenzbarriere (17), dadurch gekennzeichnet, daß die von der Flüssigkeit durchströmte Barriere (17) zumindest mit einem wesentlichen Teil ihrer Durchströmfläche oberhalb des Ruhewasserspiegels (11) in dem Behälter (2) angeordnet ist.

2. Vorrichtung nach Anspruch 1, dadurch gekennzeichnet, daß die Barriere (17) oberhalb einer Überlaufwand (12) angeordnet ist, die den Behälter (2) in eine erste (14) und in eine zweite Abscheidekammer (15) unterteilt.

3. Vorrichtung nach Anspruch 2, dadurch gekennzeichnet, daß die Oberkante (16) der Überlaufwand (12) in Höhe des Ruhewasserspiegels (11) liegt.

4. Vorrichtung nach einem der Ansprüche 1 bis 3, dadurch gekennzeichnet, daß die Barriere (17) um eine horizontale Achse schwenkbar ist.

5. Vorrichtung nach Anspruch 4, dadurch gekennzeichnet, daß die Schwenkachse in Höhe des Ruhewasserspiegels (11) liegt.

6. Vorrichtung nach einem der Ansprüche 1 bis 5, dadurch gekennzeichnet, daß im Zulauf eine Verschlußvorrichtung (19) angeordnet ist.
